# DEMANDE DE BREVET EUROPEEN

(11) **EP 3 971 323 A1**
(43) Date de publication de la demande: **23.03.2022**
(21) Numéro de dépôt: 20020416.2
(22) Date de dépôt: 17.09.2020
(51) Int. Cl.: C25B 1/00, C01B 3/06

(54) **PRODUCTION D'HYDROGEN À PARTIR D'EAU ET DE DÉCHETS MÉTALLIQUES**

(71) Demandeur: Sgro Antonio, 06100 Nice (FR)
(72) Inventeur: Sgro, Antonio, 06100 NICE (FR); Régis Gérard, Didier Pain, 97133 Saint Barthelemy (971) (FR)

(57) **Abrégé**

La technologie BGH2 pourrait bientôt faire d'énormes progrès, Cela est dû aux **recherches menées par une équipe privé** qui a développé un moyen **beaucoup plus économique et durable de produire de l'hydrogène sans** avoir besoin d'énergie extérieure en utilisant des matériaux de recyclage que l'on trouve partout.

L'utilisation d'une cartouche avec des métaux comprimés permet de la remplacer facilement lorsqu'elle est épuisée et de fonctionner en toute sécurité sans arrêter le système.

**APLICATION E ACTION**

- **Première action** : La réalisation du système **BLUEGEN ENERGY H2** est actuellement capable de produire de l'hydrogène sans avoir besoin d'aucune ressource extérieure.
- **Deuxième action** : Faire fonctionner le moteur à combustion interne d'un bateau.
- **Troisième action** : considérant que notre système arrive à une température de 200 °C nous pouvons l'utiliser pour le chauffage de :
- D'appartements, maisons individuelles ou immeubles
- L'eau sanitaire
- Les piscines.
- **Quatrième action** :
- Il est également possible de récupérer le surplus de vapeur afin d'alimenter un système de dessalement d'eau de mer ou autres systèmes fonctionnent à la vapeur.
- **Cinquième action** : La production importante d'hydrogène nous pouvons alimenter :
- Piles à combustible, stations de recharge pour les voitures à hydrogène et électriques, lieux isolés par exemple : refuges de montagne isolées, alimentation des groupe électrogènes à d'hydrogène, etc..

## Description

### INTRODUCTION

« **Ma priorité *est de mettre en œuvre des systèmes qui ne génèrent pas de pollution atmosphérique et qui produisent zéro émission, pour un monde meilleur.***

**Suite au plan commercial et à la consolidation sur le marché, aujourd'hui j'ai construit un prototype final du système BGH2. Dans le même temps, Je continue avec mon équipe de Français et d'Italiens à optimiser les paramètres opérationnels et d'augmenter l'utilisation de matières premières renouvelables, tout en évaluant les performances et l'efficacité du système.**

### Les 4 points forts du système

Le système est basé pour produire trois énergies :
1) Production d'hydrogène
2) Production d'électricité
3) Production de chaleur.
4) Cartouche.

**Le système BGH2 comprend :**
**1)** réacteur où l'eau est décomposée pour extraire
   L'hydrogène, appelé électrolyse.
**2)** l'électricité est produite avec la pile à combustible appelée PEM.
**3)** au moment de la réaction qui a lieu dans le réacteur, une température de 200 ° degrés est atteinte, elle peut donc être utilisée pour diverses applications.
**4)** les cartouches sont le cœur du système où les divers déchets non toxiques sont insérés à l'intérieur.

### Invention

**L'invention du système BGH2 est basée sur la fabrication d'hydrogène sans utilisation d'aucune source d'énergie, mais seulement avec des déchets métalliques que l'on trouve partout avant d'être recyclés,**

**Il est clair qu'après la fin de la réaction dans le réacteur, il ne reste que de l'oxyde d'aluminium (alumine) Oxyde d'aluminium céramique caractérisé par la formule chimique Al2O3. ... Il est utilisé dans de nombreux domaines, tels que l'industrie de la brique, du réfractaire et de la céramique, l'électronique et la mécanique, ainsi qu'être utilisé dans le biomédical comme matériau de greffage, il est clair que nous obtenons tout cela sans l'utilisation d'aucune énergie.**

### Composants principaux de l'installation et Description du Fonctionnement

Les principaux composants du système sont les suivants :
- Réservoir d'eau (1)
- Réacteur de production d'hydrogène (2)
- Réservoir déshumidificateur H2 (3)
- Réservoir de stockage d'hydrogène (4)
- Cartouche (5)
- Tableau de commande électrique ATEX (6)
- Système de support en métal (7)
- Conteneur spécial possible (sur demande) (8)

### Fonctionnement du système : (réf. voire les numéros susmentionnés)

Le réservoir (1) est rempli d'eau.

Après ouverture du réservoir avec une fermeture rapide (2), la cartouche spéciale est placée à l'intérieur sur son support et la fermeture rapide est fermée. (5)

À ce stade, le réservoir (2) est rempli d'eau provenant du réservoir (1) et commence immédiatement la réaction chimique avec la production d'hydrogène à16 bars qui est poussée par sa pression à l'intérieur du réservoir (3) puis il est filtré et purifié à 99%.

### Utilisations possibles du système :

- Refuges alpins avec la possibilité d'isolement d'hiver.
- Stations TELECOM.
- Villages ou lieux isolés en les zones chaudes eu froide.
- Usines de traitement des eaux (dessalement, potabilisation etc.)
- Production directe dans les stations-service pour la recharge des voitures à

Hydrogène.
- Remplacement des stations normales de production d'hydrogène par électrolyse avec Consommation électrique.
- Production de chaleur centralisée pour chauffage collectif.

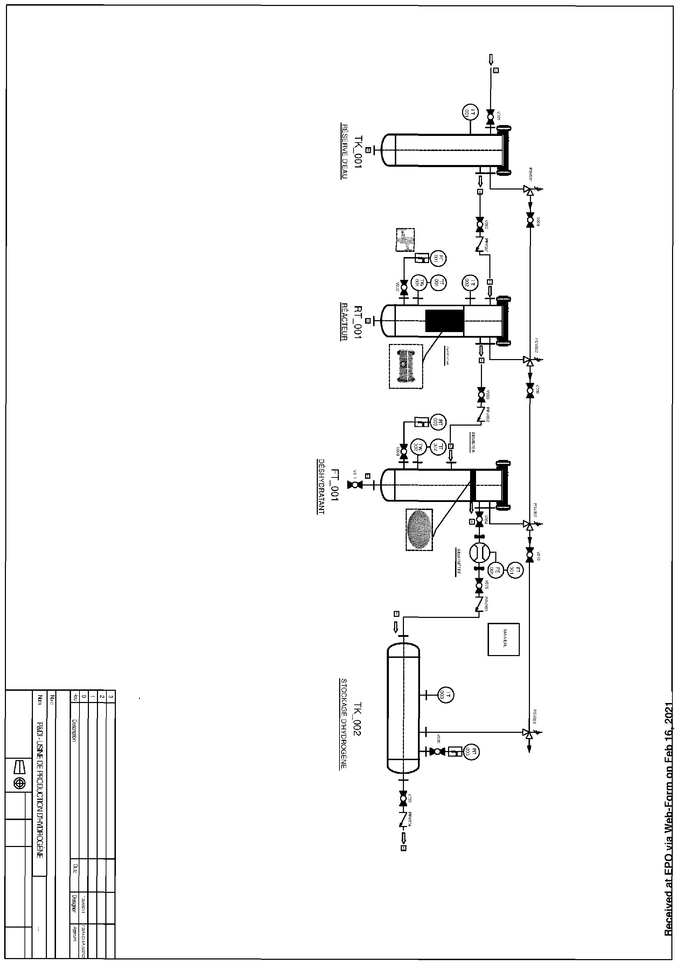

## Revendications

1. **PREMESSA**
*L'hydrogène est peut-être l'élément le plus abondant sur terre, mais on le trouve rarement sous sa forme pure. E Bien sûr, ce processus d'extraction a besoin d'énergie, mais l'hydrogène peut être produit ou extrait en utilisant pratiquement n'importe quelle source d'énergie primaire, qu'elle soit fossile ou renouvelable. En général, l'hydrogène peut être produit en utilisant une variété de ressources, y compris les combustibles fossiles, comme le gaz naturel et le charbon, la biomasse, les cultures non alimentaires, l'énergie nucléaire et les sources d'énergie renouvelables, comme l'énergie éolienne, solaire, géothermique et hydroélectrique, cela signifie que pour produire de l'hydrogène, il faut l'extraire de son composé. Bien que la majeure partie de la production mondiale d'hydrogène soit aujourd'hui assurée par un procédé appelé reformage du méthane à la vapeur (SMR), l'hydrogène peut également être produit par un procédé qui utilise de l'électricité renouvelable. Les principaux procédés actuels de production d'hydrogène sont les suivants :*
- ***Électrolyse***
- ***Reformage du méthane à la vapeur (réaction de synthèse)***
- ***Réforme (Réaction de synthèse)***
*En fait, l'hydrogène peut actuellement être stocké dans des bouteilles spéciales remplies d'un matériau approprié afin d'augmenter la capacité de production par la production d'hydrures.L'idée de concevoir un tel système est née de l'expérience des inventeurs acquise sur le terrain Après une période d'études techniques et d'ingénierie, il a été possible de développer un système de production d'hydrogène gazeux sans utilisation d'énergie externe, qu'elle provienne du réseau électrique ou de l'énergie solaire*/*éolienne. L'utilisation de déchets spéciaux mais communs a permis une forte réduction des coûts de production par rapport à ceux que l'on trouve couramment dans les systèmes actuels qui utilisent l'électricité produite par le réseau ou par d'autres sources telles que l'énergie solaire ou éolienne. La présente invention est basée sur le processus chimique bien connu de* /*'"électrolyse de l'eau" : l'électrolyse de l'eau est un processus électrolytique dans lequel le passage d'un courant électrique provoque la décomposition de l'eau en oxygène et en hydrogène gazeux.*
*Il est évident que le coût de l'électricité requise pour le processus (actuellement 48 KWh*/*Kg H2) a un impact significatif sur le coût du produit final, c'est-à-dire l'hydrogène.*
*Dans le cas où cette électricité serait produite à un coût presque nul, les coûts de l'installation auraient un impact significatif tant dans le cas du photovoltaïque (milliers de panneaux photovoltaïques) que de l'énergie éolienne (grandes centrales).*
*Il est évident que trouver un procédé qui réduit considérablement ces coûts est un grand avantage pour le coût de l'hydrogène.*
*L'utilisation de différentes sources d'eau (eau potable, saumâtre et même eau de mer) aurait signifié une diversification des applications.*
*Une autre motivation des inventeurs du système BGH2 était de faciliter la réduction des temps "morts". C'est pourquoi on* a *pensé* à *créer des cartouches équilibrées en fonction des produits utilisés qui, selon la quantité d'hydrogène requise, peuvent être placées les unes sur les autres dans des sacs biodégradables ou des cartouches spéciales.*
*Bien sûr, dans le cas de grandes quantités d'hydrogène, les réacteurs sont modulaires afin qu'ils puissent être mis en parallèle.*
*L'ensemble du système BGH2 est fabriqué conformément à la norme ATEX II 2G Ex ib IIC T6, qui est la norme à laquelle il est fait référence pour l'hydrogène.*

2. **LE SYSTÈME**
*Comme le montre le schéma ci-joint, et forme circulaire dont:*
- *Réservoir n° 1 TK_001*
- *Réacteur n° 1 RT_001*
- *Déshumidificateur n° 1 FT_001*
- *Réservoir de stockage d'hydrogène n°1 TK_002*
- *Tableau électrique n° 1*
- *Série d'instruments n°1*
*Le système est normalement positionné sur un cadre métallique.*

3. **PROCESSUS DE FONCTIONNEMENT**
*Une cartouche composée de déchets particuliers dont le poids relatif est tel qu'en contact avec l'eau, l'électrolyse de l'eau avec la quantité correcte d'hydrogène a lieu, est placée à l'intérieur du réacteur RT_001. Une quantité d'eau équilibrée (en fonction de la réaction avec les autres produits "non chimiques") est introduite dans le réservoir TK_001 par l'ouverture de la vanne V001 qui peut être de type manuel ou automatique. Une fois la quantité exacte atteinte, l'eau est pressurisée (environ* 5 - 6 *bars) au moyen d'air comprimé. La quantité exacte d'eau est vérifiée au moyen d'un transmetteur de niveau avec affichage du panneau LT001.*
*Une fois l'eau pressurisée, elle est rapidement envoyée dans le réacteur RT_001 par l'ouverture d'une vanne manuelle ou automatique V002, tandis que le clapet anti-retour PRV001 empêche le retour éventuel de l'hydrogène qui commence immédiatement à être produit.*
*Les transmetteurs de niveau LT002, les transmetteurs de température TIT001 et les transmetteurs de pression PIT001 envoient au panneau (affichage) les différentes indications concernant la réaction en cours. Au cours de ce processus, il est possible d'atteindre des températures de 200°C et des pressions d'environ 6 à 20 bars maximum.*
*L'hydrogène produit est ensuite envoyé par la vanne manuelle ou automatique V003 vers le déshumidificateur FT001* : *à son entrée, l'hydrogène rencontre un paquet lamellaire qui réduit fortement l'humidité éventuelle du gaz tandis que l'humidité est éliminée par le passage dans les cartouches "coalescentes". Le gaz qui sort du déshumidificateur est pratiquement déshumidifié à 99,9%.*
*Bien entendu, des transmetteurs de température et de pression sont également installés sur le déshumidificateur pour le contrôle normal des valeurs.*
*À la sortie du déshumidificateur est mesurée et comptée la quantité d'hydrogène produite par le débitmètre FT001.*
*Enfin, l'hydrogène produit est envoyé au réservoir de stockage TK_002 : la pression dans le réservoir est contrôlée par l'émetteur PIT003.*
*Toute l'instrumentation est ATEX (antidéflagrant pour l'hydrogène) tandis que le tableau de commande et de contrôle peut être placé dans une zone sécurisée.*
*L'ensemble du système sera automatisé avec une fermeture rapide à commande électrique des ouvertures d'entrée du réacteur pour effectuer les chargements de cartouches, et le déshumidificateur pour nettoyer le filtre à roseaux.*
*Toutes les vannes seront automatisées et actionnées pneumatiquement à l'aide d'air comprimé.*
*La seule utilisation de l'électricité est pour les quelques instants de pressurisation de l'eau.*

4. **INVENTION**
*La différence fondamentale entre notre invention et la production d'hydrogène qui a normalement lieu, consiste dans le fait que l'hydrogène est produit en utilisant pas le courant électrique produit par des sources externes mais en utilisant des déchets et donc en respectant pleinement la réduction du dioxyde de carbone CO2.*
*Notre invention est une méthode absolument nouvelle pour obtenir de l'hydrogène, simple et innovante, dont voici les principaux avantages :*
- *Aucune utilisation d'électricité provenant du réseau ou d'autres sources*
- *L'hydrogène produit localement par de simples cartouches de matériau commun de notre propre production.*
- *Le système nécessite 4 types d'eau* : *saumâtre* - *eau potable* - *eau de mer* - *et eau de pluie, la seule qui ne doit pas être utilisée et celle qui contient des produits chimiques à moins d'être purifiée.*
- *Fonctionnement simple et entretien minimum.*
- *Le plus important est que les résidus qui restent au fond du réacteur et de l'eau, ne contiennent aucun composé chimique et ne sont donc pas nocifs pour l'homme et la nature.*

5. **APPLICATIONS:**
*Les applications de l'hydrogène sont innombrables, surtout aujourd'hui qu'il est appliqué à la navigation de plaisance, au transport de marchandises par route et* à *la circulation des voitures.*
*Mais il ya beaucoup d'autres si vous pensez que l'hydrogène produit peut également être utilisé pour produire de l'électricité, mais dans notre cas, sans utiliser de piles à combustible mais des groupes électrogènes qui existent actuellement sur le marché mondial qui sont alimentés par l'hydrogène.*
